# FASCICULE DE BREVET EUROPEEN

(11) **EP 0 726 055 B1**
(45) Date de publication et mention de la délivrance du brevet: **29.10.1997**
(21) Numéro de dépôt: 96400167.1
(22) Date de dépôt: 24.01.1996
(51) Int. Cl.: A47J 37/12

(54) **Appareil électrique de cuisson**
Elektrisches Kochgerät
Electric cooking apparatus

(30) Priorité: 08.02.1995 FR 9501465
(43) Date de publication de la demande: 14.08.1996
(73) Titulaire: MOULINEX S.A., 75008 Paris (FR)
(72) Inventeur: Bois, Bernard Marcel, F-14000 Caen (FR); Collas, Guy, F-14123 Ifs (FR); Giffard, Sylvain, F-14610 Cambes en Plaine (FR)
(74) Mandataire: Busquets, Jean-Pierre

(56) Documents cités:
- EP-A- 0 587 300
- DE-A- 3 103 450
- FR-A- 1 517 736
- FR-A- 2 186 210
- FR-A- 2 239 224

## Description

La présente invention se rapporte aux appareils électriques de cuisson comprenant un boîtier renfermant une cuve chauffée par un moyen de chauffage et équipée d'un couvercle monté articulé sur le bord supérieur du boîtier et susceptible d'occuper une position de fermeture de la cuve.

Elle concerne plus précisément les appareils dans lesquels le couvercle comporte un bord descendant et un contre-couvercle fixé à distance de la paroi interne du couvercle, ainsi qu'un joint d'étanchéité comportant une partie tubulaire destinée à venir reposer sur le bord supérieur de la cuve lorsque le couvercle est en position de fermeture. Un tel appareil est connu du document FR-A-1 517 736.

Dans de tels appareils, il est important de garantir l'étanchéité entre la cuve et le couvercle malgré les tolérances de fabrication en grande série admises pour les différentes pièces constituant le couvercle et le boîtier. Malheureusement, il s'avère, qu'après un long usage de l'appareil, l'articulation du couvercle sur le boîtier présente des jeux indésirables qui se traduisent souvent par une non-superposition du joint sur le bord supérieur de la cuve, entraînant, d'une part, une perte d'étanchéité entre cuve et couvercle, et, d'autre part, un rapprochement d'une région du bord de cuve vers le bord descendant du couvercle occasionnant sur le couvercle un point de température élevé.

L'invention a pour but de réaliser un joint qui pallie les inconvénients cités ci-dessus.

Selon l'invention, le joint comporte une partie formant pied fixée entre le bord périphérique du contre-couvercle et la paroi interne du couvercle et une lèvre externe agencée entre la partie tubulaire et le bord descendant du couvercle, et s'étendant vers le bas au-delà du plan contenant la surface inférieure de la partie tubulaire jusqu'à venir en appui sur ledit bord descendant.

Selon une caractéristique importante de l'invention, l'extrémité libre de la lèvre vient au contact de la face interne du bord du couvercle descendant.

Ainsi, grâce aux caractéristiques particulières décrites ci-dessus et données à la lèvre, on obtient, à la fois, une bonne étanchéité interdisant aux vapeurs de pénétrer dans l'espace périphérique délimité entre le contre-couvercle et la paroi interne du bord descendant, ainsi qu'une prévention contre les possibles points chauds par mise en contact du bord de cuve contre la lèvre et non plus contre le bord descendant du couvercle.

Selon encore une autre caractéristique de l'invention, plus particulièrement, applicable aux appareils de cuisson dans lesquels la cuve comporte un panier équipé d'une poignée saillante, et le couvercle présente en sa périphérie une échancrure de passage de la poignée, le joint est formé par un profilé extrudé dont les extrémités sont fixées à une pièce moulée formant joint.

En effet, avec ce type d'appareil le bord découpé de l'échancrure présente généralement un profil anguleux qui provoque des pliures et/ou frisures du joint et de la lèvre et partant des fuites au niveau des angles et de la lèvre sur le couvercle. Ainsi grâce à cette réalisation en deux pièces, le joint profilé est préservé de tout coude brutal et la lèvre peut donc s'appliquer sans pli sur pratiquement toute la périphérie du bord descendant du couvercle, et au niveau de l'échancrure, la pièce formant joint épouse parfaitement le contour de l'échancrure.

Les caractéristiques et avantages de l'invention ressortiront d'ailleurs de la description qui va suivre, à titre d'exemple, en référence aux dessins annexés dans lesquels :
- la figure 1 est une représentation partielle schématique et en coupe verticale d'un appareil de cuisson selon l'invention comportant un joint d'étanchéité interposé entre le couvercle et la cuve ;
- la figure 2 est une vue partielle éclatée et en perspective illustrant le joint selon l'invention en phase de montage et monté sur une pièce formant également joint bordant une échancrure de passage d'une poignée d'un panier équipant l'appareil de cuisson.

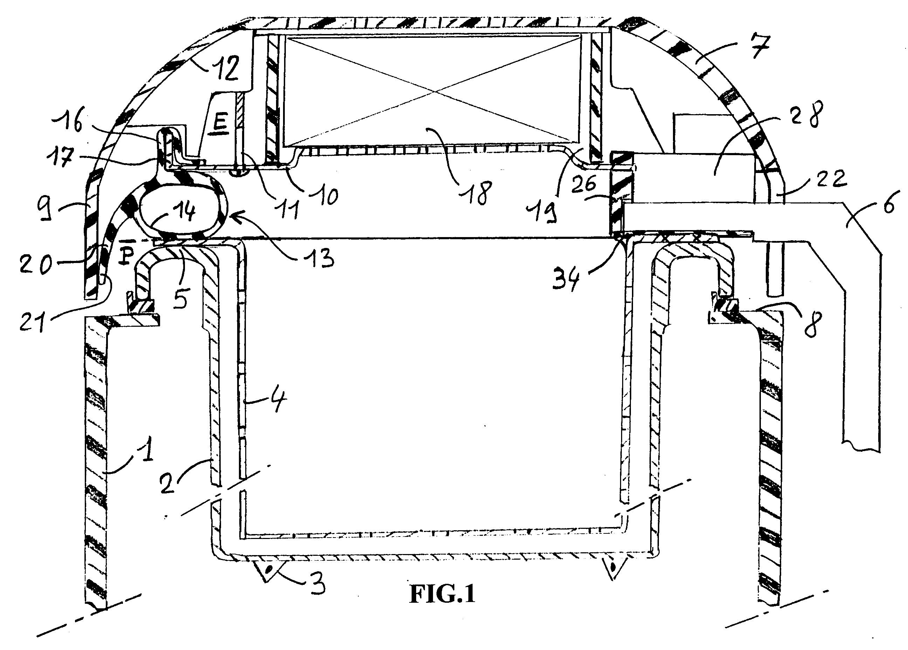

L'appareil représenté à la figure 1 illustre de façon schématique une friteuse comprenant un boîtier 1 renfermant une cuve 2 chauffée par un moyen de chauffage 3 tel qu'une résistance blindée et comportant un panier 4 apte à reposer sur le bord supérieur 5 de la cuve et équipé d'une poignée 6 saillante vers l'extérieur, ainsi qu'un couvercle 7 monté articulé sur le bord supérieur 8 du boîtier 1 au moyen d'une charnière non représentée et susceptible d'occuper une position de fermeture de la cuve 2 (figure 1) lors notamment d'une préparation de friture. Dans l'exemple schématisé, la cuve et le couvercle présentent un contour circulaire, mais il pourrait bien entendu être rectangulaire.

Le couvercle 7 comporte un bord descendant 9 et un contre-couvercle 10 fixé par exemple par des vis 11 à la paroi interne 12 du couvercle 7. Comme on le voit mieux sur la partie gauche de la figure 1, le couvercle est équipé d'un joint d'étanchéité 13 comportant une partie tubulaire 14 qui est destinée à venir reposer, lorsque le couvercle est en position de fermeture, sur le bord supérieur 5 de la cuve 2 ou, en présence du panier 4, sur le bord supérieur de ce panier, et qui est relié à une partie 16 formant pied fixée entre le bord périphérique 17 du contre-couvercle 10 et la paroi interne 12 du couvercle 7.

En outre, le couvercle 7 contient une cartouche filtrante 18 interposée dans un compartiment 19 ménagé entre le contre-couvercle 10 et la paroi interne 12.

Dans une réalisation préférentielle de l'appareil de cuisson, le boîtier 1 et le couvercle 7 sont réalisés en une matière plastique susceptible de se dégrader à une température élevée telle que, par exemple, un polypropylène.

Selon l'invention, le joint 13 comporte en outre une lèvre externe 20 agencée entre la partie tubulaire 14 et le bord descendant 9 du couvercle 7 et s'étendant vers le bas, au-delà du plan P contenant la surface inférieure de la partie tubulaire 14, en direction dudit bord descendant 9. En outre, l'extrémité libre 21 de la lèvre 20 vient au contact de la face de la paroi interne 12 du bord descendant 9 du couvercle 7.

Comme représenté sur les figures, le joint 13 est un profilé extrudé réalisé en continu et susceptible d'être tronçonné dans la longueur pour s'adapter aux différentes périphéries des cuves de cuisson fabriquées. Dans un but d'optimisation de la fabrication du profilé, la lèvre 20 est implantée sur la périphérie externe de la partie tubulaire 14.

Pour des raisons thermiques, le joint 13 est réalisé en un silicone haute température.

Ainsi, grâce à la réalisation particulière du joint 13 et notamment de la lèvre 20, on obtient, d'une part, une bonne étanchéité entre la paroi interne 12 du couvercle 7 et le contre-couvercle 10 empêchant donc des entrées de vapeur dans l'espace E et partant la formation de gouttelettes de condensation qui peuvent se produire au contact de la paroi froide 12 du couvercle, ainsi que des fuites de vapeur non filtrées par la cartouche 18, et d'autre part, en cas de mauvaise position du couvercle 7 par rapport à la cuve 2, on évite un contact direct dangereux du bord 5 contre le bord descendant 9 et donc la création d'un point chaud susceptible, dans le cas d'un couvercle métallique, de provoquer des brûlures à l'usager, et dans le cas d'un couvercle en polypropylène, de faire fondre la région mitoyenne correspondante du couvercle 7. Le bord supérieur 5 de la cuve peut avoir une forme de crochet comme illustré ou une forme plate identique à celle du panier 4.

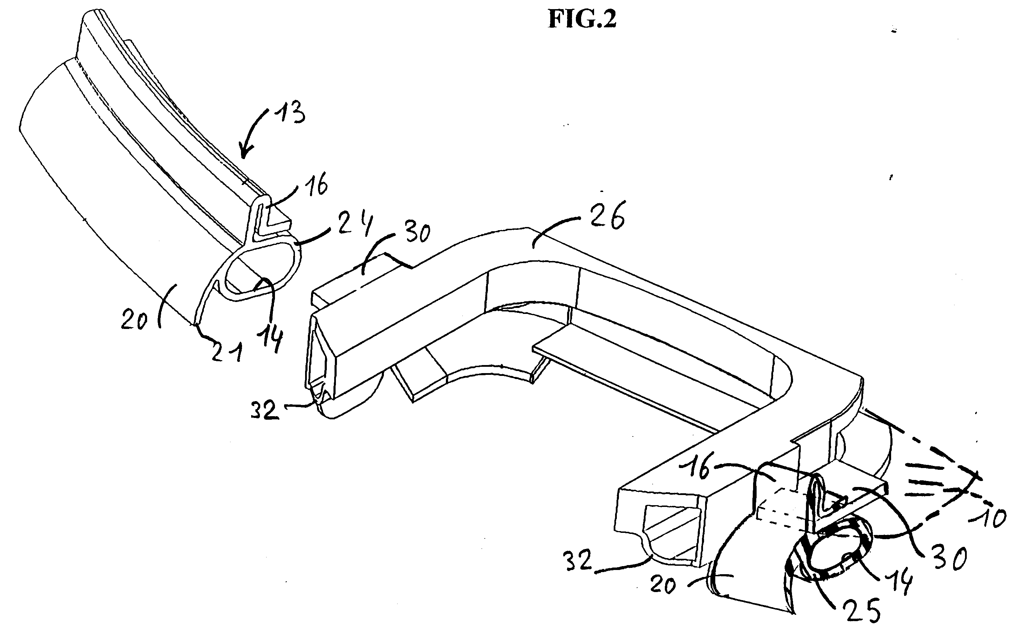

Dans l'exemple de réalisation de l'appareil de cuisson représenté à la figure 1, la poignée 6 fait saillie vers l'extérieur au travers d'une échancrure de passage 22 pratiquée dans le bord périphérique descendant 9 du couvercle 7. Du fait de cette échancrure, le joint 13 ne peut plus s'étendre sur toute la périphérie du bord 5 de la cuve 2 et l'invention prévoit donc de pallier à cet inconvénient, d'une part, en réalisant le joint 13 selon un tronçon dont les extrémités 24 et 25 (figure 2) s'étendent jusqu'aux bords latéraux de l'échancrure 22 et, d'autre part, en équipant le bord de ladite échancrure d'une pièce moulée 26 formant joint et réalisée en silicone haute température. Cette pièce moulée 26 épouse le bord de l'échancrure et, comme figure 2, présente la forme d'un U dont les branches latérales 28 comportent des pattes 30 destinées à la fixation des extrémités 24 et 25 du joint 13. Cette fixation est de préférence obtenue par collage.

Ainsi, le joint profilé 13 s'étend pratiquement sur toute la périphérie du bord 5 de la cuve 2 avec la lèvre correctement appliquée, c'est-à-dire sans frisure, contre le bord descendant 9, et la pièce moulée 26 forme un joint épousant parfaitement le contour anguleux de l'échancrure sans également former de pli et peut ainsi par sa face inférieure 32 venir s'appliquer correctement sur un contre-joint 34 porté par l'embase de la poignée 6 constituant donc une étanchéité parfaite à ce niveau.

## Revendications

1. Appareil électrique de cuisson comprenant un boîtier (1) renfermant une cuve (2) chauffée par un moyen de chauffage (3) et équipée d'un couvercle (7) monté articulé sur le bord supérieur (8) du boîtier et susceptible d'occuper une position de fermeture de la cuve, ledit couvercle comportant un bord descendant (9) et un contre-couvercle (10) fixé à la paroi interne (12) du couvercle (7), ainsi qu'un joint d'étanchéité (13) comportant une partie tubulaire (14) destinée à venir reposer sur le bord supérieur (5) de la cuve lorsque le couvercle est en position de fermeture caractérisé en ce que le joint (13) est reliée à une partie (16) formant pied fixée entre le bord périphérique (17) du contre-couvercle (10) et la paroi interne (12) du couvercle, et comporte une lèvre externe (20) agencée entre la partie tubulaire (14) et le bord descendant (9) du couvercle (7), et s'étendant vers le bas, au-delà du plan P contenant la surface inférieure de la partie tubulaire (14), en direction dudit bord descendant (9).

2. Appareil électrique de cuisson selon la revendication 1,
**caractérisé en ce que** le joint (13) est un profilé extrudé.

3. Appareil électrique de cuisson selon la revendication 1 ou 2,
**caractérisé en ce que** la lèvre (20) est implantée sur la périphérie externe de la partie tubulaire (14).

4. Appareil électrique de cuisson selon l'une quelconque des revendications précédentes,
**caractérisé en ce que** l'extrémité libre (21) de la lèvre (20) vient au contact de la face interne (12) du bord descendant (9) du couvercle (7).

5. Appareil électrique de cuisson selon la revendications 2 et les revendications 3 ou 4 dans lequel la cuve (2) comporte un panier (4) équipé d'une poignée saillante (6) et le couvercle (7) présente en sa périphérie une échancrure (22) de passage de la poignée,
**caractérisé en ce que** l'échancrure (22) est équipée d'une pièce moulée (26) formant joint épousant la forme du bord découpé de ladite échancrure et le joint profilé (13) est formé d'un tronçon dont les extrémités (24,25) sont fixées à ladite pièce moulée (26).

6. Appareil électrique de cuisson selon la revendication 5,
**caractérisé en ce que** la pièce (26) formant joint comporte des pattes (30) et les extrémités du joint (13) sont fixées respectivement aux dites pattes par collage.

7. Appareil électrique de cuisson selon la revendication 6,
**caractérisé en ce que** la pièce (26) formant joint est une pièce moulée en un silicone haute température.

8. Appareil électrique de cuisson selon l'une quelconque des revendications précédentes,
**caractérisé en ce que** le couvercle (7) est réalisé en une matière plastique susceptible de se dégrader à une température élevée.

9. Appareil électrique de cuisson selon l'une quelconque des revendications précédentes,
**caractérisé en ce qu'**il constitue une friteuse.

10. Appareil électrique de cuisson selon la revendication 9,
**caractérisé en ce que** le couvercle (7) est équipé d'un filtre anti-odeur (18) agencé entre le contre-couvercle (10) et la paroi interne (12) du couvercle (7).

## Claims

1. Electric cooking appliance comprising a casing (1) enclosing a container (2) heated by a heating means (3) and equipped with a lid (7) pivotally mounted on the top edge (8) of the casing and able to occupy a position of closure of the container, the said lid having a falling edge (9) and a counter-lid (10) fixed to the internal wall (12) of the lid (7), and a sealing joint (13) having a tubular part (14) designed to come to rest on the top edge (5) of the container when the lid is in the closed position, characterised in that the joint (13) is connected to a part (16) forming a foot fixed between the peripheral edge (17) of the counter-lid (10) and the internal wall (12) of the lid, and has an external lip (20) arranged between the tubular part (14) and the falling edge (9) of the lid (7), and extending downwards, beyond the plane P containing the bottom surface of the tubular part (14), in the direction of the said falling edge (9).

2. Electrical cooking appliance according to Claim 1,
**characterised in that** the joint (13) is an extruded profiled element.

3. Electrical cooking appliance according to Claim 1 or 2,
**characterised in that** the lip (20) is located on the external periphery of the tubular part (14).

4. Electrical cooking appliance according to any one of the preceding claims,
**characterised in that** the free end (21) of the lip (20) comes into contact with the internal face (12) of the falling edge (9) of the lid (7).

5. Electrical cooking appliance according to Claims 2 and Claims 3 or 4, in which the container (2) has a basket (4) equipped with a projecting handle (6), and the lid (7) has on its periphery an indentation (22) for the passage of the handle,
**characterised in that** the indentation (22) is equipped with a moulded part (26) forming a joint following the shape of the cut-out edge of the said indentation and the profiled element (13) is formed by a section whose ends (24, 25) are fixed to the said moulded part (26).

6. Electrical cooking appliance according to Claim 5,
**characterised in that** the part (26) forming a joint has lugs (30) and the ends of the joint (13) are fixed respectively to the said lugs by bonding.

7. Electrical cooking appliance according to Claim 6,
**characterised in that** the part (26) forming a joint is a part moulded from high-temperature silicone.

8. Electrical cooking appliance according to any one of the preceding claims,
**characterised in that** the lid (7) is produced from a plastic liable to degrade at a high temperature.

9. Electrical cooking appliance according to any one of the preceding claims,
**characterised in that** it forms a deep fryer.

10. Electrical cooking appliance according to Claim 9,
**characterised in that** the lid (7) is equipped with an anti-odour filter (18) arranged between the counter-lid (10) and the internal wall (12) of the lid (7).

## Patentansprüche

1. Elektrisches Kochgerät mit einem Gehäuse (1), das einen durch ein Heizelement (3) beheizten Topf (2) umschließt und mit einem am oberen Rand (8) des Gehäuses angelenkten Deckel ausgestattet ist, der eine den Topf verschließende Stellung einnehmen kann, wobei der Deckel einen heruntergezogenen Rand (9) und einen Gegendeckel (10), der an der Innenwand (12) des Deckels (7) befestigt ist, sowie eine Dichtung (13) aufweist, die einen schlauchförmigen Teil (14) aufweist, der auf dem oberen Rand (5) des Topfes ruht, wenn der Deckel seine Verschlußstellung einnimmt, **dadurch gekennzeichnet, daß** die Dichtung (13) mit einem einen Fuß bildenden Teil (16) verbunden ist, das zwischen dem Umfangsrand (17) des Gegendeckels (10) und der Innenwand (12) des Deckels befestigt ist, und eine äußere Lippe (20) aufweist, die zwischen dem schlauchförmigen Teil (14) und dem heruntergezogenen Rand (9) des Deckels (7) angeordnet ist und sich nach unten über die Ebene P hinaus, welche die untere Fläche des schlauchförmigen Teils (14) enthält, in Richtung auf den heruntergezogenen Rand (9) erstreckt.

2. Elektrisches Kochgerät nach Anspruch 1, **dadurch gekennzeichnet, daß** die Dichtung (13) ein Strangpreßprofil ist.

3. Elektrisches Kochgerät nach Anspruch 1 oder 2, **dadurch gekennzeichnet, daß** die Lippe (20) an den Außenumfang des schlauchförmigen Teils (14) angesetzt ist.

4. Elektrisches Kochgerät nach einem der vorangehenden Ansprüche, **dadurch gekennzeichnet, daß** das freie Ende (21) der Lippe (20) in Kontakt mit der Innenfläche (12) des heruntergezogenen Randes (9) des Deckels (7) kommt.

5. Elektrisches Kochgerät nach den Ansprüchen 2 und 3 oder 4, worin der Topf (2) einen Korb (4) mit einem hervorstehenden Griff (6) und der Deckel (7) in seinem Unfang eine Ausnehmung (22) zum Durchtritt des Griffs aufweist, **dadurch gekennzeichnet, daß** die Ausnehmung (22) mit einem Formstück (26) ausgestattet ist, welches eine Dichtung bildet und sich an die Form des herausgeschnittenen Randes der Ausnehmung anpaßt, und daß die Profildichtung (13) aus einem Teilstück besteht, dessen Enden (24, 25) am Formstück (26) befestigt sind.

6. Elektrisches Kochgerät nach Anspruch 5, **dadurch gekennzeichnet, daß** das die Dichtung bildende Formstück (26) Nasen (30) aufweist und die Enden der Dichtung (13) jeweils durch Kleben an diesen Nasen befestigt sind.

7. Elektrisches Kochgerät nach Anspruch 6, **dadurch gekennzeichnet, daß** das die Dichtung bildende Formstück (26) aus einem Hochtemperatur-Silikon geformt ist.

8. Elektrisches Kochgerät nach einem der vorangehenden Ansprüche, **dadurch gekennzeichnet, daß** der Deckel (7) aus einem Kunststoffmaterial gebildet ist, das bei hohen Temperaturen unbeständig ist.

9. Elektrisches Kochgerät nach einem der vorangehenden Ansprüche, **dadurch gekennzeichnet, daß** es eine Friteuse darstellt.

10. Elektrisches Kochgerät nach Anspruch 9, **dadurch gekennzeichnet, daß** der Deckel (7) einen Geruchsfilter (18) aufweist, der zwischen dem Gegendeckel (10) und der Innenwand (12) des Deckels (7) angeordnet ist.
